# EUROPÄISCHE PATENTSCHRIFT

(11) **EP 1 046 828 B1**
(45) Veröffentlichungstag und Bekanntmachung des Hinweises auf die Patenterteilung: **16.02.2005**
(21) Anmeldenummer: 00104508.7
(22) Anmeldetag: 10.03.2000
(51) Int. Cl.: F16C 35/077, B60B 27/00

(54) **Lagereinheit, insbesondere Radlagereinheit für Kraftfahrzeuge**
Bearing unit,especially wheel bearing unit for motor vehicles
Dispositif de palier,en particulier palier de roue pour véhicules à moteur

(30) Priorität: 22.04.1999 DE 19918351
(43) Veröffentlichungstag der Anmeldung: 25.10.2000
(73) Patentinhaber: Volkswagen Aktiengesellschaft, 38436 Wolfsburg (DE)
(72) Erfinder: Hasselmeyer, Alfred, Dipl.-Ing., 38524 Sassenburg (DE)
(74) Vertreter: Beck, Michael Rudolf

(56) Entgegenhaltungen:
- CH-A- 230 767
- DE-A- 19 713 880
- DE-U- 8 616 016
- FR-A- 2 199 372
- GB-A- 2 276 214
- US-A- 4 545 691

## Beschreibung

Die Erfindung bezieht sich auf eine Radlagereinheit nach dem Oberbegriff von Patentanspruch 1.

Aus der DE-U-86 16 016 ist eine Radlagereinheit für Kraftfahrzeuge bekannt, bei der ein Wälzlager vorgesehen ist. Der Lagerinnenring des Wälzlagers ist auf einer Welle aufgenommen, wobei der Lageraußenring des Wälzlagers in einem Gehäuse axial unverschiebbar aufgenommen wird. Zur Sicherung des Lageraußenrings, zumindest in seiner axialen Richtung, wird eine Seite des Außenringes unmittelbar formschlüssig gegenüber dem Bauteil, nämlich dem Gehäuse fixiert, wobei die andere Seite des Lageraußenringes mit einem Segerring fixiert wird, der - wie üblich - in eine am Gehäuse vorgesehene Nut eingreift. Nicht nur aufgrund der Relativbewegung zwischen Lagerinnenring bzw. Lageraußenring und den zwischen dem Lagerinnenring und dem Lageraußenring angeordneten Kugelelementen des Lagers existieren innerhalb der Lagereinheit bestimmte Kräfte, die einerseits in radialer Richtung, andererseits in axialer Richtung wirken und entsprechend vom Bauteil, nämlich vom Gehäuse, aufgenommen werden müssen.

Die DE-A-195 43 436 offenbart eine Radlagereinheit, bei der der Lagerinnenring des Lagers formschlüssig auf dem Radflansch angeordnet ist, wobei ein Ende des Radflansches durch den Vorgang der Kaltumformung derartig umgeformt ist, daß der Lagerinnenring des entsprechenden Lagers hier durch das kragenförmige Endstück des Radflansches umfaßt und auf der äußeren Umfangsfläche des Radflansches entsprechend fixiert ist. Weiterhin wird hier der Radflansch selbst mit Hilfe einer hülsenartigen Gewindemutter auf die hier vorgesehene Gelenkwelle aufgeschraubt.

In der Praxis wird das entsprechende Lager der Radlagereinheit in dem Schwenklager einer Kraftfahrzeugachse grundsätzlich immer mit Hilfe eines Preßsitzes realisiert. Weiterhin ist für einen Etektromotor aus der GB 2 276 214 A bekannt, ein Lager über eine Kunststoffbuchse mit doppelt-keilförmiger Außenfläche in eine Gehäuseöffnung einzuknöpfen. Gegen das Herauswandem des Lagers, d. h. gegen eine entsprechend axiale Verschiebung, werden entweder zwei Sicherungsringe oder auch eine Kombination von kragenförmigen Bund und/oder Sicherungsringen realisiert. Die im Fahrbetrieb auftretenden Kräfte bzw. Momente (Seitenkraftmoment) müssen bei einem derartigen Konstruktionsprinzip durch eine hohe Radialpressung des Lageraußenrings gegenüber dem Bauteil, d.h. dem Gehäuse und hier durch die entsprechende Reibungskraft in der Trennfuge, aufgenommen werden. Die Praxis hat gezeigt, daß während des Fahrbetriebs Kippbewegungen des Lagers innerhalb der Lagereinheit auftreten können, die beispielsweise eine Größenordnung von 0,1 bis 0,25 mm haben und schon bei geringen Querbeschleunigungen auftreten können. Aufgrund dieser Kippbewegungen entstehen nicht nur Ovalverformungen, insbesondere Ovalverformungen entlang des Lageraußenringes, die den Einsatz dieser Standardkonstruktion insbesondere bei Aluminium-Schwenklagern erschweren bzw. erst gar nicht ermöglichen, sondern es entstehen auch entsprechende Knackgeräusche" während des durch die Kippbewegung erfolgenden Lagewechsels" des Lagers. Zwar gibt es auch Konstruktionen, insbesondere Radlager-Konstruktionen der dritten Generation" die zur Vermeidung dieser Probleme besser geeignet sind, diese Radlager-Konstruktionen" haben jedoch eine Erhöhung des Gewichtes und eine Erhöhung des Montageaufwandes zur Folge, so daß hierdurch die angestrebte Gewichtsreduktion bzw. der gewünschte geringere Montageaufwand nicht erreicht werden kann. Weiterhin ist bei der Radlagereinheit eines Kraftfahrzeuges die thermische Ausdehnung der hier verwendeten Materialien unterschiedlich, so daß die vorgespannte Axial-Festlegung des Lagers der Lagereinheit nicht immer gewährleistet ist, was wiederum die Kippbewegungen während des Fahrbetriebs verstärkt. Im Ergebnis ist die im Stand der Technik bekannte Radlagereinheit für Kraftfahrzeuge nicht optimal ausgebildet.

Der Erfindung liegt daher die Aufgabe zugrunde, bei einer Radlagereinheit nach dem Oberbegriff von Patentanspruch 1 die mechanische Fixierung des Lagers zu verbessern und die Kippbewegungen des Lagers zu vermeiden.

Diese Aufgabe wird durch eine Radlagereinheit nach Patentanspruch 1 gelöst. Aufgrund der Anordnung einer zusätzlichen Montagehülse nutzt die erfindungsgemäße konstruktive Anordnung nunmehr eine größere Abstützbasis. Der Lageraußenring des Lagers sitzt praktisch in der Montagehülse eingebördelt. Weiterhin umfaßt nach einer Ausgestaltung der Erfindung die Montagehülse einerseits den Radträger, wobei die Montagehülse selbst dann mit einem zusätzlichen Element, nämlich mit Hilfe einer entsprechenden Spannmutter gegenüber dem Bauteil verspannt ist, was im folgenden noch deutlicher werden wird. Zusätzlich ist die Montagehülse nunmehr so ausgeführt, daß auch thermische Ausdehnungsunterschiede zwischen den hier verwendeten Materialien die Fixierung des Lageraußenringes eher verstärken als verringern, insbesondere wenn hier als Materialien Aluminium und Stahl verwendet wird, was im folgenden noch ausführlich erläutert werden wird. Im Ergebnis ist durch die erfindungsgemäße Konstruktion, insbesondere durch das zusätzliche Element der Montagehülse eine axiale Fixierung des Lageraußenrings gewährleistet, wobei das gesamte Lager eine gute Abstützung innerhalb des Radträgen erfährt. Weiterhin ist der - wie bisher im Stand der Technik übliche - Ovalverzug des Lagers nicht mehr gegeben und - im Endeffekt - auch eine geringere Überdeckung zwischen dem Radträger und dem Lager an sich möglich, da nunmehr der bisher bekannte Reibschluß durch einen "vorgespannten Fomischluß" ersetzt wird. Durch die erfindungsgemäße Konstruktion kann nicht nur das Gesamtgewicht verringert werden, sondern auch die bisher im Stand der Technik bekannten Kippbewegungen, d.h. Relativbewegungen zwischen Lager und Radträger werden vermieden, so daß auch die dadurch bisher entstandenen Geräusche eliminiert sind. Schließlich ist durch die erfindungsgemäße Konstruktion auch eine günstigere Kraftaufteilung zwischen der radial und axial wirkenden Kraft realisiert ist.

Es gibt nun eine Vielzahl von Möglichkeiten, die erfindungsgemäße Lagereinnheit in vorteilhafter Weise auszugestalten und weiterzubilden. Hierfür darf an dieser Stelle auf die dem Patentanspruch 1 nachgeordneten Patentansprüche verwiesen werden. Im übrigen wird nun eine Ausführungsform der Erfindung anhand einer Zeichnung näher erläutert.

In der Zeichnung zeigt:
- Fig. 1: die erfindungsgemäße Radlagereinheit für ein Kraftfahrzeug, in einer schematischen, teilweise geschnittenen Darstellung von der Seite und
- Fig. 2: die Wirkungsweise der Montagehülse der erfindungsgemäßen Lagereinheit in einer teilweise geschnittenen schematischen Darstellung von der Seite.

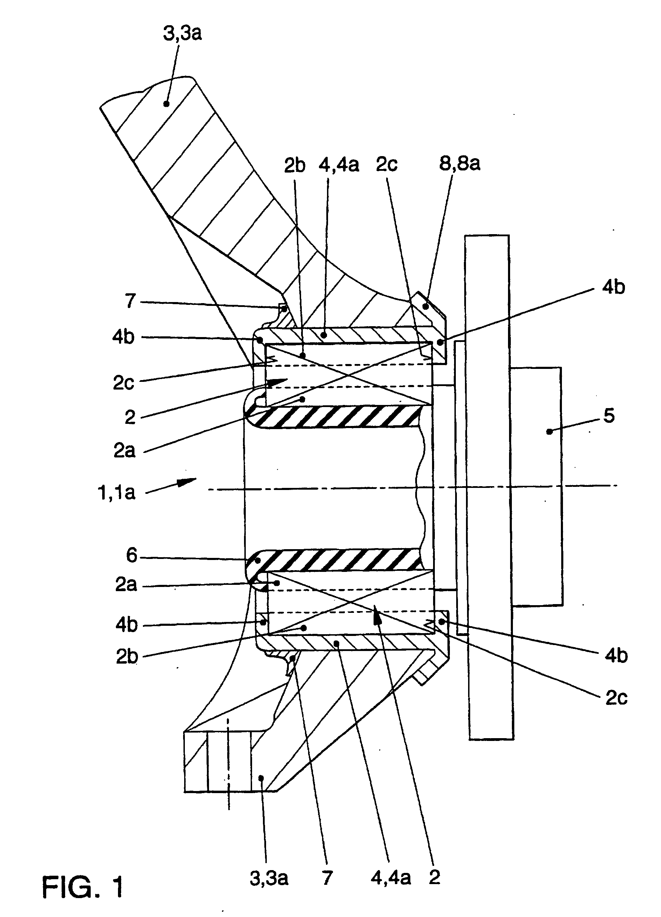

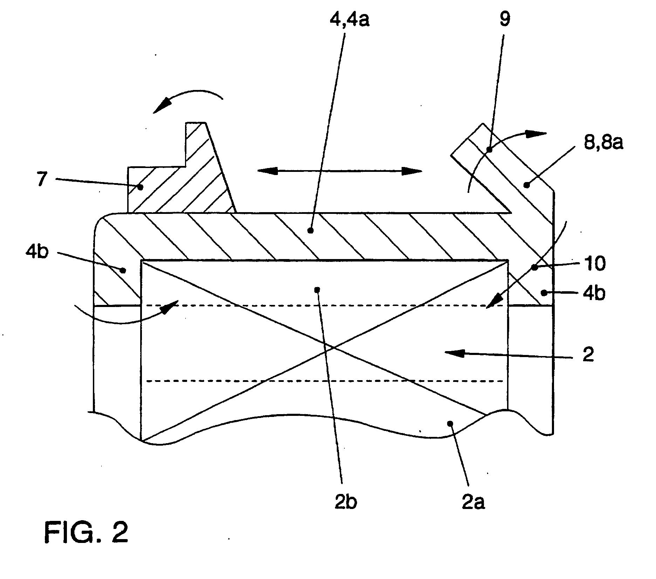

Die Fig. 1 und 2 zeigen - zumindest teilweise - eine Radlagereinheit 1a für Kraftfahrzeuge, mit einem Lager 2, das einen Lagerinnenring 2a und einen Lageraußenring 2b aufweist. Da das Lager 2 hier nur schematisch dargestellt ist, ist der Lagerinnenring 2a und der Lageraußenring 2b teilweise durch gestrichette Linien angedeutet. Der Lageraußenring 2b wirkt für seine Fixierung gegenüber einem Radträger 3, im folgenden Bauteil 3 genannt, in zumindest axialer Richtung mit einem Halteelement 4 funktional zusammen. Bei der hier dargestellten Ausführungsform ist das Bauteil 3 als Schwenklager 3a ausgeführt, wobei der Lagerinnenring 2a mit einer Radnabe 5 über eine innere Welle 6 entsprechend verbunden ist.

Die mechanische Befestigung des Lagers 2 der Lagereinheit 1 innerhalb des Bauteiles 3, d.h. innerhalb des Schwenklagers 3a, wird nun dadurch erreicht, daß das Halteelement 4 als Montagehülse 4a ausgeführt ist, daß die Montagehülse 4a zumindest teilweise die Stirnwandungen 2c des Lageraußenringes 2b umfaßt und daß die Montagehülse 4a gegenüber dem Bauteil 3, d.h. gegenüber dem Schwenklager 3a im wesentlichen in axialer Richtung fixierbar ist. Durch die hier dargestellte erfindungsgemäße Konstruktion der Lagereinheit 1 ist eine mechanische axiale und auch radiale Fixierung des Lagers 2 innerhalb des Bauteils 3 ermöglicht, wobei gleichzeitig eine Versteifung der Lagereinheit 1 erreicht ist. Durch die Montagehülse 4a wird eine vorgespannte formschlüssige Fixierung des Lagers 2, ähnlich wie mit einer Patrone realisiert, wodurch die eingangs erläuterten Kippbewegungen des Lagers 2 vermieden sind und der Einsatz des hier dargestellten Lagers 2 auch bei einem Schwenklager 3a, das aus Aluminium hergestellt ist, ermöglicht ist. Die erfindungsgemäße Konstruktion nutzt die nunmehr größere Abstützbasis des Lagerdurchmessers des Lagers 2 gegenüber der Lagerbreite des Lagers 2. Aufgrund der Vermeidung der Kippbewegungen, wie bisher üblich, wird die Lebensdauer des Lagers 2 erhöht, wobei durch dessen axiale erfindungsgemäße Fixierung innerhalb des Schwenklagers 3a die bisher üblichen Mikrobewegungen und hierdurch hervorgerufene "Knackgeräusche" verhindert sind.

Wie die Fig. 1 erkennen läßt, weißt die Montagehülse 4a zwei die Stirnwandungen 2c zumindest teilweise umfassende kragenähnliche Seitenstücke 4b auf, die nach innen ragen. Hierdurch wird ein im wesentlichen U-förmiges nach innen wirkendes Teil des Lagers 2 gebildet, so daß der Lageraußenring 2b durch einen vorgespannten Formschluß innerhalb der Montagehülse 4a fixierbar ist. Es ist nun möglich, daß mehrere Seitenstücke 4b entlang des Umfanges der Montagehülse 4a vorgesehen sind, hier jedoch sind die Seitenstücke 4b als Seitenwandungen ausgebildet, die entsprechend umlaufen. Durch die hier dargestellte Montagehülse 4a ist zusätzlich eine radiale Fixierung des Lagers 2 innerhalb der Lagereinheit 1 gewährleistet. Da der Lageraußenring 2b nun mit Hilfe eines durch die Montagehülse 4a realisierten Formschlusses entsprechend fixiert ist, muß nun die Montagehülse 4a selbst zumindest in axialer Richtung gegenüber dem Bauteil 3, hier dem Schwenklager 3a, fixierbar sein.

Diese Fixierung der Montagehülse 4a wird mit Hilfe einer Spannmutter 7 realisiert, die auf der der Radnabe 5 abgewandten Seite der Montagehülse 4a aufschraubbar ist, wobei der Umfangsbereich der Montagehülse 4a hier ein entsprechendes, nicht dargestelltes Außengewinde, zum Aufschrauben der Spannmutter 7 aufweist. Auf der der Radnabe 5 zugewandten Seite der Montagehülse 4a ist ein die Verspannung mit dem Bauteil 3 bewirkendes Teilstück 8 vorgesehen. Zwischen dem Teilstück 8 und der Spannmutter 7 ist nun das Bauteil 3, hier das Schwenklager 3a, einspannbar, wie deutlich aus der Fig. 1 zu ersehen ist.

Das Teilstück 8 ist als abgewinkelter Fassungskragen 8a ausgebildet, wobei dieser radseitig das Schwenklager 3a formschlüssig umfaßt und den entsprechenden Bereich des rohrförmigen Schwenklagers 3a zur Fixierung heranzieht".

Weiterhin ist der Fassungskragen 8a hier so ausgestaltet, daß sich der Spanneffekt dieser zwischen der Spannmutter 7 und dem Fassungskragen 8a realisierten Bördelung noch erhöhen läßt. Dies ist aus Fig. 2 ersichtlich.

Für den Fall von thermischen Ausdehnungsunterschieden zwischen dem Lager 2 und dem Bauteil 3, beispielsweise bei einer Ausdehnung des Schwenklagers 3a in Querrichtung, wird der Fassungskragen 8a nach außen gedrückt, was hier durch den ersten Pfeil 9 dargestellt ist. Da das den Fassungskragen 8a gegenüberliegende kragenähnliche Seitenstück 4b (Seitenwandung) aufgrund der Bewegung des Fassungskragens 8a nach innen gedrückt wird, wird hierdurch die axiale Fixierung des Lageraußenringes 2b innerhalb der Montagehülse 4a nochmals verstärkt, was hier durch den zweiten Pfeil 10 angedeutet ist. Anders ausgedrückt, der Fassungskragen 8a und das dem Fassungskragen 8a gegenüberliegende kragenähnliche Seitenstück 4b sind derartig ausgebildet und/oder dimensioniert, daß eine Auswärtsbewegung des Fassungskragens 8a eine Einwärtsbewegung des kragenähnlichen Seitenstückes 4b bewirkt. Ein ähnlicher Effekt ergibt sich für die Spannmutter 7 und das der Spannmutter 7 gegenüberliegende andere Seitenstück 4b.

Durch die erfindungsgemäße Konstruktion werden nun mehrere Vorteile erreicht. Zunächst muß der Sitz des Lagers 2 innerhalb der Lagereinheit 1 nicht mehr als Preßsitz ausgeführt werden, wodurch auch Ausdehnungsunterschiede zwischen Stahl und Aluminium, also zwischen Lager 2 und Bauteil 3 nicht mehr Schwankungen der Haftkräfte hervorrufen. Weiterhin führen, insbesondere bei thermischen Ausdehnungen, axiale Dehnungsunterschiede bei der erfindungsgemäßen Konstruktion zu einer festeren Fixierung.

Die im Stand der Technik bisher bekannten Kippbewegungen des Lagers 2 werden vermieden, wobei auch hohe Radialkräfte keinen Ovalverzug, insbesondere des Lageraußenringes 2b verursachen. Insgesamt sind die Relativbewegungen zwischen Lager 2 und Bauteil 3 verhindert bzw. eliminiert. Durch die hier realisierte vorgespannte axiale Fixierung des Lagers 2, insbesondere des Lageraußenringes 2b, ist eine hohe Radialkraft - wie bisher im Stand der Technik - für die Abstützung bzw. Verhinderung der Kippbewegungen nicht mehr erforderlich, so daß auch die Lebensdauer der Lager 2 erhöht ist. Im Ergebnis ist durch die erfindungsgemäße Konstruktion eine bessere mechanische Fixierung des Lagers 2 möglich, wobei eine entsprechend leichte Montage realisierbar ist.

### BEZUGSZEICHENLISTE

- 1: Lagereinheit
- 1a: Radlagereinheit für Kraftfahrzeuge
- 2: Lager
- 2a: Lagerinnenring
- 2b: Lageraußenring
- 2c: Stimwandungen
- 3: Bauteil, Radträger
- 3a: Schwenklager
- 4: Halteelement
- 4a: Montagehülse
- 4b: Seitenstücke
- 5: Radnabe
- 6: Welle
- 7: Spannmutter
- 8: Teilstück
- 8a: Fassungskragen
- 9: 1. Pfeil
- 10: 2. Pfeil

## Patentansprüche

1. Radlagereinheit (1a) in einer Durchgangsöffnung eines Radträgers (3) eines Kraftfahrzeugs, umfassend:
- ein Lager (2) mit einem Lagerinnenring (2a) und einen Lageraußenring (2b), das relativ zu dem Radträger (3) axial festgelegt ist,
**dadurch gekennzeichnet,**
- **daß** die Radlagereinheit (1a) weiterhin eine Montagehülse (4a) umfaßt, die in der Durchgangsöffnung des Radträgers (3) durch axiale Verspannung mit diesem festgelegt ist, und
- **daß** die Montagehülse (4a) den Lageraußenring (2a) des Lagers (2) an dessen Stimwandungen (2c) zumindest teilweise formschlüssig umgreift und dabei axial einspannt.

2. Lagereinheit nach Anspruch 1, **dadurch gekennzeichnet, daß** der Radträger (3) als Schwenklager (3a) ausgeführt ist.

3. Lagereinheit nach Anspruch 1 oder 2, **dadurch gekennzeichnet, daß** der Lagerinnenring (2a) mit einer Radnabe (5) verbunden ist.

4. Lagereinheit nach einem der vorstehenden Ansprüche, **dadurch gekennzeichnet, daß** die Montagehülse (4a) zwei die Stirnwandungen (2c) zumindest teilweise umfassende kragenähnliche Seitenstücke (4b) aufweist.

5. Lagereinheit nach einem der vorstehenden Ansprüche, **dadurch gekennzeichnet, daß** die Seitenstücke (4b) als Seitenwandungen ausgebildet sind.

6. Lagereinheit nach einem der vorstehenden Ansprüche, **dadurch gekennzeichnet, daß** durch die Montagehülse (4a) zusätzlich eine radiale Fixierung des Lagers (2) realisiert ist.

7. Lagereinheit nach einem der vorstehenden Ansprüche, **dadurch gekennzeichnet, daß** der Lageraußenring (2b) durch einen mit Hilfe der Montagehülse (4a) realisierten Formschluß fixiert ist.

8. Lagereinheit nach einem der Ansprüche 3-7, **dadurch gekennzeichnet, daß** auf der der Radnabe (5) abgewandten Seite der Montagehülse (4a) eine Spannmutter (7) aufschraubbar und im Umfangsbereich der Montagehülse (4a) hier ein Außengewinde vorgesehen ist.

9. Lagereinheit nach einem der Ansprüche 3-8, **dadurch gekennzeichnet, daß** auf der der Radnabe (5) zugewandten Seite der Montagehülse (4a) ein die Verspannung mit dem Bauteil (3) bewirkendes Teilstück (8) vorgesehen ist.

10. Lagereinheit nach Anspruch 9, **dadurch gekennzeichnet, daß** zwischen dem Teilstück (8) und der Spannmutter (7) der Radträger einspannbar ist.

11. Lagereinheit nach einem der Ansprüche 9 oder 10, **dadurch gekennzeichnet, daß** das Teilstück (8) als abgewinkelter Fassungskragen (8a) ausgebildet ist.

12. Lagereinheit nach einem der vorstehenden Ansprüche, **dadurch gekennzeichnet, daß** der Fassungskragen (8a) und das dem Fassungskragen (8a) gegenüberliegende kragenähnliche Seitenstück (4b) derart ausgebildet und/oder dimensioniert ist, daß eine Auswärtsbewegung des Fassungskragens (8a) eine Einwärtsbewegung des kragenählichen Seitenstückes (4b) bewirkt.

## Claims

1. Wheel bearing unit (1a) in a passage opening of a wheel carrier (3) of a motor vehicle, comprising:
- a bearing (2) having a bearing inner ring (2a) and a bearing outer ring (2b) which is secured axially relative to the wheel carrier (3),
**characterized**
- **in that** the wheel bearing unit (1a) furthermore comprises a mounting sleeve (4a) which is secured in the passage opening of the wheel carrier (3) by axial clamping to the latter, and
- **in that** the mounting sleeve (4a) at least partially engages in a form-fitting manner around the bearing outer ring (2a) of the bearing (2), on the end walls (2c) thereof, and in the process axially clamps it.

2. Bearing unit according to Claim 1, **characterized in that** the wheel carrier (3) is designed as a pivot bearing (3a).

3. Bearing unit according to Claim 1 or 2, **characterized in that** the bearing inner ring (2a) is connected to a wheel hub (5).

4. Bearing unit according to one of the preceding claims, **characterized in that** the mounting sleeve (4a) has two collar-like side pieces (4b) which at least partially surround the end walls (2c).

5. Bearing unit according to one of the preceding claims, **characterized in that** the side pieces (4b) are designed as side walls.

6. Bearing unit according to one of the preceding claims, **characterized in that** a radial fixing of the bearing (2) is additionally realized by means of the mounting sleeve (4a).

7. Bearing unit according to one of the preceding claims, **characterized in that** the bearing outer ring (2b) is fixed by a form-fitting connection realized with the aid of the mounting sleeve (4a).

8. Bearing unit according to one of Claims 3-7, **characterized in that** a clamping nut (7) can be screwed on that side of the mounting sleeve (4a) which faces away from the wheel hub (5), and an outer thread is provided here in the circumferential region of the mounting sleeve (4a).

9. Bearing unit according to one of Claims 3-8, **characterized in that** a part (8) bringing about the clamping to the component (3) is provided on that side of the mounting sleeve (4a) which faces the wheel hub (5).

10. Bearing unit according to Claim 9, **characterized in that** the wheel carrier can be clamped between the part (8) and the clamping nut (7).

11. Bearing unit according to either of Claims 9 and 10, **characterized in that** the part (8) is designed as an angled holding collar (8a).

12. Bearing unit according to one of the preceding claims, **characterized in that** the holding collar (8a) and the collar-like side piece (4b) lying opposite the holding collar (8a) are designed and/or dimensioned in such a manner that an outwards movement of the holding collar (8a) brings about an inwards movement of the collar-like side piece (4b).

## Revendications

1. Dispositif de palier de roue (1a) dans une ouverture de passage d'un support de roue (3) d'un véhicule automobile, comprenant :
- un palier (2) avec une bague intérieure de palier (2a) et une bague extérieure de palier (2b) qui est fixé axialement par rapport au support de roue (3),
**caractérisé en ce que**
- le dispositif de palier de roue (1a) comprend en outre un manchon de montage (4a) qui est fixé dans l'ouverture de passage du support de roue (3) par serrage axial avec celui-ci, et
- **en ce que** le manchon de montage (4a) vient en prise au moins partiellement par engagement positif autour de la bague extérieure de palier (2a) du palier (2) au niveau de ses parois frontales (2c) et la serre ainsi axialement.

2. Dispositif de palier selon la revendication 1, **caractérisé en ce que** le support de roue (3) est réalisé en tant que palier pivotant (3a).

3. Dispositif de palier selon la revendication 1 ou 2, **caractérisé en ce que** la bague intérieure de palier (2a) est connectée à un moyeu de roue (5).

4. Dispositif de palier selon l'une quelconque des revendications précédentes, **caractérisé en ce que** le manchon de montage (4a) présente deux pièces latérales (4b) de type rebords qui entourent au moins partiellement les parois frontales (2c).

5. Dispositif de palier selon l'une quelconque des revendications précédentes, **caractérisé en ce que** les pièces latérales (4b) sont réalisées sous la forme de parois latérales.

6. Dispositif de palier selon l'une quelconque des revendications précédentes, **caractérisé en ce que** l'on réalise en outre une fixation radial du palier (2) par le manchon de montage (4a).

7. Dispositif de palier selon l'une quelconque des revendications précédentes, **caractérisé en ce que** la bague extérieure de palier (2b) est fixée par un engagement positif réalisé à l'aide du manchon de montage (4a).

8. Dispositif de palier selon l'une quelconque des revendications 3 à 7, **caractérisé en ce que** du côté du manchon de montage (4a) opposé au moyeu de roue (5) peut être vissé un écrou de serrage (7), et un filetage extérieur est prévu ici dans la région périphérique du manchon de montage (4a).

9. Dispositif de palier selon l'une quelconque des revendications 3 à 8, **caractérisé en ce que** l'on prévoit sur le côté du manchon de montage (4a) tourné vers le moyeu de roue (5) une pièce partielle (8) provoquant un serrage avec le composant (3).

10. Dispositif de palier selon la revendication 9, **caractérisé en ce que** le support de roue peut être serré entre la pièce partielle (8) et l'écrou de serrage (7).

11. Dispositif de palier selon l'une quelconque des revendications 9 ou 10, **caractérisé en ce que** la pièce partielle (8) est réalisée sous forme de rebord de monture coudé (8a).

12. Dispositif de palier selon l'une quelconque des revendications précédentes, **caractérisé en ce que** le rebord de monture (8a) et la pièce latérale (4b) de type rebord opposée au rebord de monture (8a) sont réalisés et/ou dimensionnés de telle sorte qu'un mouvement vers l'extérieur du rebord de monture (8a) provoque un mouvement vers l'intérieur de la pièce latérale de type rebord (4b).
